# FASCICULE DE BREVET EUROPEEN

(11) **EP 3 625 088 B1**
(45) Date de publication et mention de la délivrance du brevet: **21.04.2021**
(21) Numéro de dépôt: 18728446.8
(22) Date de dépôt: 14.05.2018
(51) Int. Cl.: B60R 19/12, B60R 21/34, B60R 19/48, B62D 35/00

(54) **VOLET AERODYNAMIQUE DE SOUS-BASSEMENT RETRACTABLE AVEC REPRISE D'EFFORT PAR L'APPUI BAS**
EINZIEHBARE AERODYNAMISCHE UNTERBODENKLAPPE MIT KRAFTAUFNAHME DURCH DEN UNTEREN TRÄGER
RETRACTABLE AERODYNAMIC UNDERBODY FLAP WITH FORCE ABSORPTION BY THE LOWER SUPPORT

(30) Priorité: 16.05.2017 FR 1754313
(43) Date de publication de la demande: 25.03.2020
(73) Titulaire: Compagnie Plastic Omnium, 69007 Lyon (FR)
(72) Inventeur: ANDRE, Gérald, 01500 Saint Denis en Bugey (FR); GINJA, Stéphane, 01500 Amberieu En Bugey (FR)
(74) Mandataire: LLR
(86) Numéro de dépôt international: PCT/FR2018/051166
(87) Numéro de publication internationale: WO 2018/211206

(56) Documents cités:
- DE-A1- 10 137 175
- DE-A1- 19 904 515
- DE-A1-102009 034 906
- FR-A1- 2 864 811
- FR-A1- 2 927 303
- US-B1- 9 517 802

## Description

L'invention concerne la partie avant des véhicules automobiles, et plus particulièrement l'agencement des différents organes présents dans cette partie dans le but d'améliorer la résistance du véhicule aux chocs frontaux.

La conception de la partie avant fait appel à de nombreux tests, et à des calculs complexes permettant de préfigurer l'état du véhicule après un choc. Lorsque le choc est important, la déformation contrôlée de l'avant du véhicule a pour objet de préserver la vie des passagers transportés. Toutefois, en dessous d'un certain seuil, lorsque l'on considère que le choc n'engage pas l'intégrité physique des occupants du véhicule, les concepteurs s'arrangent alors pour absorber l'énergie en autorisant la déformation de certains organes bien identifiés afin d'une part, de réduire les conséquences d'un impact sur un usager de la route externe au véhicule tel qu'un piéton et d'autre part, de minimiser les coûts de réparation du véhicule.

Ces organes de protection peuvent comprendre une poutre galbée, fixée sur les longerons longitudinaux du véhicule par l'intermédiaire d'un boitier de déformation destiné à absorber une partie de l'énergie du choc en se déformant (crash box) et constituant la voie transversale haute. Le parechoc avant est monté en règle générale de manière à habiller la voie transversale haute.

Les organes techniques situés dans la zone frontale et constituant la face avant technique, sont montés sur un châssis lui-même fixé en règle générale sur les longerons ou, préférentiellement, lorsque l'occupation de l'espace du compartiment moteur doit être optimisée, sur l'avant de la crash box ou sur la face arrière de la poutre constituant la partie haute. En cas de choc, la déformation de la crash box permet le recul sans dommage de la face avant technique.

Une deuxième poutre transversale galbée, constituant la voie transversale basse, est fixée sur la partie inférieure du parechoc et permet de renforcer ce dernier. Cette partie basse, formée en règle générale d'un matériau composite armé ou d'un thermoplastique injecté, est conçue pour se déformer de manière progressive jusqu'à un certain seuil avant que la voie transversale haute et le boitier de déformation ne commencent eux-mêmes à se déformer. Elle a donc pour fonction d'absorber en premier les chocs à des vitesses faibles, inférieures ou égales à 15Km/h.

La voie basse a également pour fonction d'absorber une partie de l'énergie lors du choc avec la jambe d'un piéton avant que la voie haute ne soit sollicitée à son tour.

La voie transversale basse peut également servir à fermer le passage de l'air vers le compartiment moteur.

Par ailleurs, afin de réduire la trainée aérodynamique des véhicules modernes, il peut être fait usage d'un volet aérodynamique mobile de sous-bassement disposé à l'avant du véhicule pour réduire et orienter le flux d'air passant sous le véhicule. Ce volet aérodynamique est articulé autour d'un axe transversal maintenu par des paliers reliés à une partie fixe du véhicule comme par exemple le châssis de la face avant technique. Le volet aérodynamique de sous-bassement est entrainé en rotation autour de son axe entre une position ouverte et une position fermée par des actionneurs, par exemple de type électrique.

L'ensemble formé par le volet aérodynamique de sous-bassement et son axe constitue alors un élément susceptible de participer à la résistance au choc du véhicule.

L'invention a pour objet de tirer parti de la proximité entre la voie transversale basse et les composants formant le volet aérodynamique pour optimiser la performance du véhicule en cas de choc frontal.

Le véhicule automobile selon l'invention comprend donc un volet aérodynamique de sous-bassement articulé en rotation autour d'un axe transversal et une voie transversale basse disposée à l'arrière de la partie basse d'un parechoc avant. Le document DE 10 2009 034906 A1 décrit une telle configuration qui correspond au préambule de la revendication 1.

Ce véhicule se caractérise en ce que la partie arrière de la voie transversale basse comporte des moyens de guidage pour, en cas de choc frontal, orienter le recul de la voie transversale basse de sorte que la face arrière de la voie transversale basse vienne en contact avec l'axe du volet aérodynamique de sous-bassement.

En cas de choc frontal à faible vitesse, la déformation de la voie transversale basse en direction de l'arrière du véhicule permet de mettre en contact la partie arrière de la voie transversale basse avec l'axe du volet aérodynamique de sous-bassement. Ceci a pour effet de faire bénéficier la voie transversale basse d'un gain de résistance lié à la combinaison de la résistance structurelle de la voie transversale basse et de la résistance de l'axe du volet aérodynamique de sous-bassement. On observera ici que, lorsque le volet aérodynamique de sous-bassement est en position fermée et prolonge l'axe dans un plan parallèle au sol, ce qui est le cas lorsque le véhicule circule à faible vitesse, l'inertie de l'axe, et donc la résistance de l'ensemble, est augmentée du voile constitué par le volet aérodynamique de sous-bassement lui-même.

L'arrangement tel que décrit ci-dessus, permet de réduire la résistance structurelle de la voie transversale basse afin d'augmenter la progressivité de la déformation de ladite voie transversale basse aux faibles énergies. Cette disposition permet ainsi de réduire les dommages physiques occasionnés à un piéton lors d'un choc à faible vitesse. Elle permet également d'augmenter la contribution de la voie basse à l'absorption de l'énergie d'un choc impliquant la face avant du véhicule sur toute sa hauteur.

Le dispositif selon l'invention peut aussi comprendre isolément, ou en combinaison, les caractéristiques suivantes :
- L'axe de rotation du volet aérodynamique de sous-bassement est monté sur des paliers fixés sur la partie basse d'un châssis d'une face avant technique.
- Le châssis de la face avant technique est fixé sur la partie arrière d'une voie transversale haute.
- La voie transversale haute est fixée à l'extrémité avant de longerons longitudinaux par l'intermédiaire de boitiers de déformation.
- Le châssis de la face avant technique est disposé à une distance supérieure à 100mm de l'extrémité avant desdits longerons longitudinaux.
- Le châssis de la face avant technique est fixé directement sur des longerons longitudinaux.
- Les moyens de guidage sont formés par un ou plusieurs étriers supérieurs et par un ou plusieurs étriers inférieurs prolongeant la voie basse respectivement au-dessus et au-dessous de l'axe du volet aérodynamique de sous-bassement.
- Le volet aérodynamique de sous-bassement comporte des fenêtres disposées à proximité de l'axe pour autoriser le passage des étriers inférieurs à travers le volet aérodynamique lorsque ledit volet aérodynamique de sous-bassement est en position ouverte.
- Les étriers inférieurs et les étriers supérieurs sont disposés transversalement de manière alternée.
- Les étriers inférieurs et les étriers supérieurs se prolongent autour de la partie arrière de l'axe du volet aérodynamique de sous-bassement.
- Le volet aérodynamique de sous-bassement est réalisé à l'aide d'un matériau thermoplastique.
- L'axe du volet aérodynamique de sous-bassement comprend un insert de renforcement se présentant sous la forme d'une tige en métal ou en matériau composite autour duquel est moulée la partie thermoplastique formant le volet aérodynamique de sous-bassement.

L'invention sera mieux comprise à la lecture des figures annexées, qui sont fournies à titre d'exemples et ne présentent aucun caractère limitatif, dans lesquelles :
- La figure 1 est une représentation schématique en perspective de la partie avant d'un véhicule.
- La figure 2 est une vue en coupe schématique dans un plan perpendiculaire à la direction transversale du dispositif faisant l'objet de la présente invention.
- La figure 3 est une vue en coupe schématique dans un plan perpendiculaire à la direction transversale d'une alternative de réalisation de l'invention.
- La figure 4 est une vue schématique en perspective du volet aérodynamique de sous-bassement.
- La figure 5 est une vue schématique en perspective d'une première forme de réalisation des moyens de guidage de la voie transversale basse.
- La figure 6 est une vue schématique en perspective d'une seconde forme de réalisation des moyens de guidage de la voie transversale basse.

Dans ce qui suit, dans le repère orthonormé OXYZ, la direction OX orientée selon la direction avant du véhicule est dénommée direction longitudinale, la direction OY, orientée selon la direction transversale du véhicule est dénommée direction transversale, et la direction OZ, orientée du bas vers le haut, est dénommée direction verticale.

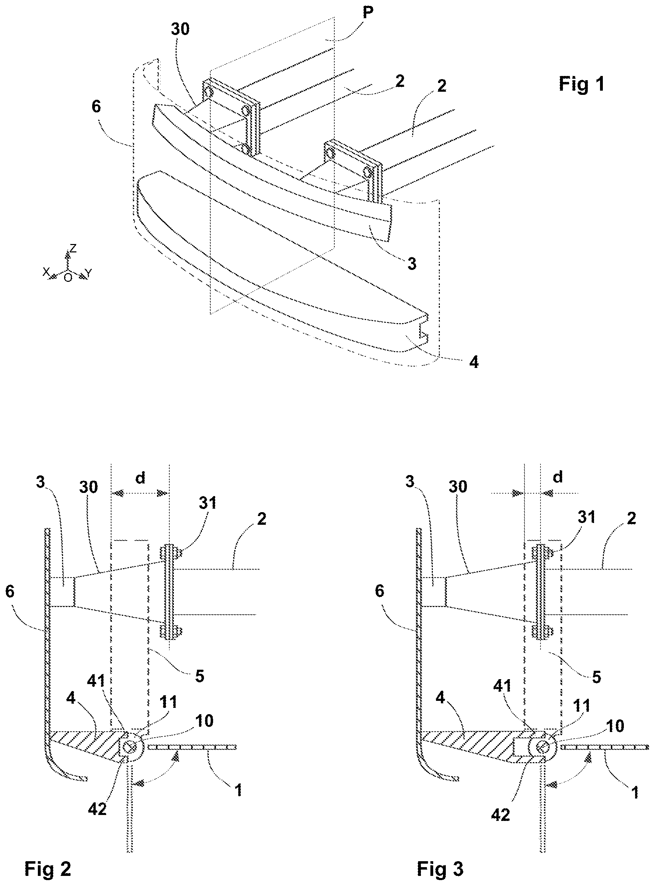

La figure 1 permet de visualiser les principaux éléments structurels de la partie avant d'un véhicule.

Une poutre transversale galbée supérieure 3, communément dénommée voie transversale haute est montée par l'intermédiaire de deux boitiers de déformation 30 (crash box) à l'extrémité avant de deux longerons 2 orientés selon la direction longitudinale du véhicule.

Le parechoc 6, représenté en ligne pointillée, est fixé sur l'avant de la voie transversale haute 3.

La partie basse du parechoc 6 dissimule une poutre transversale 4, communément désignée sous l'appellation de voie transversale basse.. Comme cela a déjà été évoqué, cette voie transversale basse 4 a pour objet de renforcer la partie basse du parechoc 6 et de limiter sa déformation en cas de choc à faible vitesse.

La figure 2 illustre le cas dans lequel le véhicule comprend un volet aérodynamique de sous-bassement 1 pivotant autour d'un axe transversal 10 entre une position fermée et une position ouverte (représentée en pointillés). L'axe 10 du volet aérodynamique de sous-bassement 1 est supporté par des paliers 11 montés sur le châssis 5 (représenté en pointillés) de la face avant technique dont les organes, tels qu'un condenseur, des moyens de guidage, un radiateur ou un avertisseur sonore, n'ont pas été représentés par souci de clarté.

Les paliers 11 sont disposés en règle générale aux deux extrémités latérales du volet aérodynamique de sous-bassement 1. Le volet aérodynamique de sous-bassement ainsi que l'axe 10 sont réalisés par exemple en matière thermoplastique. Pour éviter la déformation du volet 1 sous les effets des forces aérodynamique il peut s'avérer nécessaire de renforcer l'axe 10 à l'aide d'un insert transversal 13 se présentant sous la forme d'une tige en métal ou en matériau composite autour de laquelle est moulée la partie thermoplastique formant le volet proprement dit.

La voie transversale basse 4 est fixée sur la partie basse du parechoc 6. On observe ici que les éléments de fixation de la voie transversale basse sont indépendants de ceux de la fixation de l'axe 10, de sorte que la voie transversale basse doit parcourir une certaine distance de l'ordre de plusieurs millimètres avant de venir en contact avec l'axe 10 du volet aérodynamique de sous-bassement 1. Cet arrangement permet d'éviter de perturber le mouvement de rotation du volet aérodynamique et de faciliter l'accessibilité des éléments de fixation par les opérateurs œuvrant sur les lignes de montage.

Les moyens de guidage sont formés par des étriers supérieurs 41 et inférieurs 42 se projetant vers l'arrière de la voie transversale basse 4, et destinés à venir enserrer la partie supérieure et la partie inférieure de l'axe 10 du volet aérodynamique de sous-bassement 1 de sorte que dans son mouvement de recul, la partie arrière de la voie transversale basse 4 vienne en contact avec la partie avant de l'axe 10.

La figure 2 permet également d'illustrer le cas dans lequel le châssis 5 de la face avant technique est disposé à une distance d, en avant des longerons 2.

Cette disposition présente l'avantage d'avancer le volet aérodynamique de sous-bassement 1 au plus près du parechoc et de l'avant du véhicule, et d'améliorer l'efficacité aérodynamique du véhicule. Elle permet également de pouvoir disposer d'une voie transversale basse plus courte et d'un encombrement plus réduit.

Idéalement, cette distance d est supérieure à une centaine de millimètres, mesurée entre deux plans verticaux perpendiculaires à l'axe OX et passant respectivement par la partie extrémale avant de la face avant technique et par l'extrémité avant des longerons longitudinaux 2.

Le châssis 5 de la face avant technique peut alors être fixé au choix sur la partie arrière de la voie transversale haute 3 ou encore sur le boitier de déformation 30.

En cas de choc frontal pouvant occasionner la déformation du boitier 30, le châssis 5 de la face avant technique recule également en évitant de détériorer les organes qu'il supporte.

La figure 3 illustre le cas, moins favorable d'un point de vue aérodynamique, dans lequel le châssis 5 de la face avant technique est fixé directement sur l'avant des longerons 2. La voie transversale basse doit alors être plus longue ou, comme cela est illustré, doit disposer d'étriers allongés et d'une plus grande course de recul pour permettre de retarder la déformation du boitier 30.

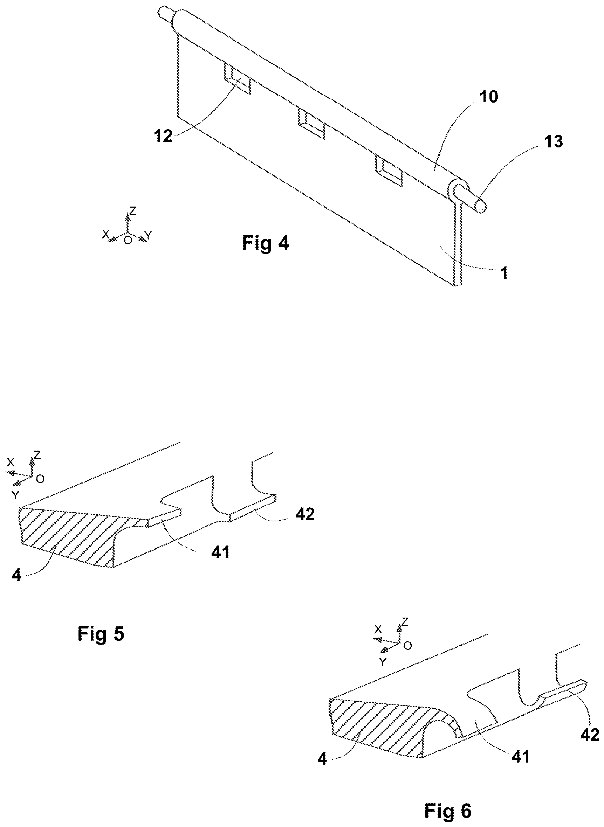

La figure 4 permet de visualiser plus en détail le volet aérodynamique de sous-bassement 1, dans lequel des fenêtres 12 sont pratiquées sur la partie du volet aérodynamique de sous-bassement 1 disposée à proximité de l'axe 10. Ces fenêtres 12 ont pour objet d'autoriser le passage des étriers inférieurs 42 lorsque le volet aérodynamique de sous-bassement 1 pivote de la position fermée vers la position ouverte.

La figure 5 illustre plus en détail la partie arrière de la voie transversale basse 4 sur laquelle sont installés les étriers supérieurs 41 et les étriers inférieurs 42. On observe que les étriers supérieurs et inférieurs ne sont pas placés en vis-à-vis les uns des autres, et sont disposés transversalement selon un ordre alterné.

Dans cette première forme de réalisation, les étriers 41 et 42 sont prévus pour se positionner autour de la seule partie avant de l'axe 10. Cette première forme de réalisation autorise un démoulage facilité de la voie transversale basse 4 lorsque cette dernière est réalisée en thermoplastique injecté.

Une seconde forme de réalisation, illustrée à la figure 6, prévoit que les étriers 41 et 42 se prolongent autour de la partie arrière de l'axe 10. Bien que plus complexe à réaliser par moulage, cette seconde forme de réalisation autorise une reprise par la voie transversale basse des efforts longitudinaux subis par l'axe 10 lorsque le volet 1 est en position ouverte et doit s'opposer aux déformations de l'axe ou du volet engendrées par les forces aérodynamiques lorsque le véhicule se déplace à grande vitesse. Cette disposition peut également permettre d'envisager une diminution de la rigidité de l'axe du volet aérodynamique de sous-bassement 1, de sorte que, lorsque le volet aérodynamique de sous-bassement 1 est en position ouverte, ledit axe 10 puisse se déformer légèrement pour venir en contact avec la partie interne avant des étriers inférieurs et supérieurs.

Comme on peut le percevoir, les formes de collaboration entre l'axe 10 du volet aérodynamique de sous-bassement 1 et la voie transversale basse 4 dont les résistances mécaniques s'additionnent en cas de déformation de l'un ou de l'autre de ces organes, permettent d'optimiser la résistance du véhicule sous l'action d'un choc frontal, ou encore sous l'action de la pression aérodynamique lorsque le véhicule roule à grande vitesse.

Cela est rendu possible par la présence des moyens de guidage qui orientent le mouvement de recul de la voie transversale basse 4.

### NOMENCLATURE

1 Volet aérodynamique de sous-bassement.
10 Axe du volet aérodynamique de sous-bassement.
11 Palier de l'axe du volet aérodynamique de sous-bassement.
12 Fenêtre.
13 Insert de renforcement de l'axe du volet aérodynamique de sous-bassement.
2 Longeron longitudinal.
3 Voie transversale haute.
30 Boitier de déformation (crash box).
31 Boulons de fixation.
4 Voie transversale basse.
41 Etrier supérieur.
42 Etrier inférieur.
5 Châssis de la face avant technique.
6 Parechoc.
P Plan de coupe.
d Distance entre la partie extrémale avant du châssis de la face avant technique et l'avant du longeron longitudinal.

## Revendications

1. Véhicule automobile comprenant un volet aérodynamique (1) de sous-bassement articulé en rotation autour d'un axe transversal (10) et une voie transversale basse (4) disposée à l'arrière de la partie basse d'un parechoc (6) avant **caractérisé en ce que** la partie arrière de la voie transversale basse (4) comporte des moyens de guidage (41, 42) pour, en cas de choc frontal, orienter le recul de la voie transversale basse (4) de sorte que la face arrière de la voie transversale basse (4) vienne en contact avec l'axe (10) du volet aérodynamique de sous-bassement (1).

2. Véhicule automobile selon la revendication 1, dans lequel l'axe de rotation (10) du volet aérodynamique de sous-bassement (1) est monté sur des paliers fixés sur la partie basse d'un châssis (5) d'une face avant technique.

3. Véhicule automobile selon la revendication 2, dans lequel le châssis (5) de la face avant technique est fixé sur la partie arrière d'une voie transversale haute (3).

4. Véhicule automobile selon la revendication 3, dans lequel la voie transversale haute (3) est fixée à l'extrémité avant de longerons longitudinaux (2) par l'intermédiaire de boitiers de déformation (30).

5. Véhicule automobile selon la revendication 3 ou la revendication 4, dans lequel le châssis (5) de la face avant technique est disposé à une distance supérieure à 100mm de l'extrémité avant desdits longerons longitudinaux (2).

6. Véhicule automobile selon la revendication 2, dans lequel le châssis (5) de la face avant technique est fixé directement sur des longerons longitudinaux (2).

7. Véhicule automobile selon l'une quelconque des revendications précédentes, dans lequel les moyens de guidage (41, 42) sont formés par un ou plusieurs étriers supérieurs (41) et par un ou plusieurs étriers inférieurs (42) prolongeant la voie basse respectivement au-dessus et au-dessous de l'axe (10) du volet aérodynamique de sous-bassement (1).

8. Véhicule automobile selon la revendication 7, dans lequel le volet aérodynamique de sous-bassement (1) comporte des fenêtres (12) disposées à proximité de l'axe (10) pour autoriser le passage des étriers inférieurs à travers le volet (1) lorsque ledit volet aérodynamique de sous-bassement (1) est en position ouverte.

9. Véhicule automobile selon la revendication 7 ou la revendication 8, dans lequel les étriers inférieurs (42) et les étriers supérieurs (41) sont disposés transversalement de manière alternée.

10. Véhicule automobile selon l'une quelconque des revendications 7 à 9, dans lequel les étriers inférieurs (42) et les étriers supérieurs (41) se prolongent autour de la partie arrière de l'axe (10) du volet aérodynamique de sous-bassement (1).

11. Véhicule automobile selon l'une quelconque des revendications précédentes dans lequel le volet aérodynamique de sous-bassement (1) est réalisé à l'aide d'un matériau thermoplastique.

12. Véhicule automobile selon la revendication 11, dans lequel l'axe (10) du volet aérodynamique de sous-bassement comprend un insert de renforcement (13) se présentant sous la forme d'une tige en métal ou en matériau composite autour duquel est moulée la partie thermoplastique formant le volet aérodynamique de sous-bassement (1).

## Patentansprüche

1. Kraftfahrzeug mit einer aerodynamischen Unterbodenklappe (1), die um eine Querachse (10) drehbar angelenkt ist, und einer niedrigen Querspur (4), die am hinteren Teil des unteren Teils eines vorderen Stoßfängers (6) angeordnet ist,
**dadurch gekennzeichnet,**
**dass** der hintere Teil der niedrigen Querspur (4) Führungsmittel (41, 42) aufweist, um im Falle eines Frontalaufpralls die Rückwärtsbewegung der niedrigen Querspur (4) so zu lenken, dass die hintere Fläche der niedrigen Querspur (4) in Kontakt mit der Achse (10) der aerodynamischen Unterbodenklappe (1) kommt.

2. Kraftfahrzeug nach Anspruch 1, bei dem die Drehachse (10) der aerodynamischen Unterbodenklappe (1) auf Lagern montiert ist, die am unteren Teil eines Fahrgestells (5) einer technischen Frontplatte befestigt sind.

3. Kraftfahrzeug nach Anspruch 2, bei dem das Fahrgestell (5) der technischen Frontplatte am hinteren Teil einer hohen Querspur (3) befestigt ist.

4. Kraftfahrzeug nach Anspruch 3, wobei die hohe Querspur (3) über Deformationsgehäuse (30) am vorderen Ende der Längsträger (2) befestigt ist.

5. Kraftfahrzeug nach Anspruch 3 oder Anspruch 4, wobei das Fahrgestell (5) der technischen Frontplatte in einem Abstand von mehr als 100 mm vom vorderen Ende der Längsträger (2) angeordnet ist.

6. Kraftfahrzeug nach Anspruch 2, bei dem der Rahmen (5) der technischen Frontplatte direkt an Längsträgern (2) befestigt ist.

7. Kraftfahrzeug nach einem der voranstehenden Ansprüche, bei dem die Führungsmittel (41, 42) durch einen oder mehrere obere Bremssattel (41) und durch einen oder mehrere untere Bremssattel (42) gebildet sind, die die niedrige Spur jeweils oberhalb und unterhalb der Achse (10) der aerodynamischen Unterbodenklappe (1) verlängern.

8. Kraftfahrzeug nach Anspruch 7, bei dem die aerodynamische Unterbodenklappe (1) Fenster (12) aufweist, die in der Nähe der Achse (10) angeordnet sind, um den unteren Bremssattel den Durchtritt durch die Klappe (1) zu ermöglichen, wenn sich die aerodynamische Unterbodenklappe (1) in der geöffneten Stellung befindet.

9. Kraftfahrzeug nach Anspruch 7 oder Anspruch 8, bei dem die unteren Bremssattel (42) und die oberen Bremssattel (41) abwechselnd quer zueinander angeordnet sind.

10. Kraftfahrzeug nach einem der Ansprüche 7 bis 9, wobei sich die unteren Bremssättel (42) und die oberen Bremssättel (41) um den hinteren Teil der Achse (10) der aerodynamischen Unterbodenklappe (1) erstrecken.

11. Kraftfahrzeug nach einem der voranstehenden Ansprüche, bei dem die aerodynamische Unterbodenklappe (1) aus einem thermoplastischen Kunststoff hergestellt ist.

12. Kraftfahrzeug nach Anspruch 11, bei dem die Achse (10) der aerodynamischen Unterbodenklappe einen Verstärkungseinsatz (13) in Form eines Stabes aus Metall oder Verbundwerkstoff aufweist, um den das die aerodynamische Unterbodenklappe (1) bildende thermoplastische Teil geformt ist.

## Claims

1. Motor vehicle comprising an aerodynamic underbody flap (1) rotating about a transverse axis (10) and a lower transverse structure (4) arranged at the rear of the lower part of a front bumper (6) **characterized in that** the rear part of the lower transverse structure (4) comprises guide means (41, 42) which, in the event of a frontal impact, guide the backward movement of the lower transverse structure (4) such that the rear face of the lower transverse structure (4) comes into contact with the axis (10) of the aerodynamic underbody flap (1).

2. Motor vehicle according to claim 1, wherein the axis of rotation (10) of the aerodynamic underbody flap (1) is mounted on bearings fixed onto the lower part of a frame (5) of a technical front face.

3. Motor vehicle according to claim 2, wherein the frame (5) of the technical front face is fixed onto the rear part of an upper transverse structure (3).

4. Motor vehicle according to claim 3, wherein the upper transverse structure (3) is fixed onto the front end of longitudinal side members (2) by means of crash boxes (30).

5. Motor vehicle according to claim 3 or claim 4, wherein the frame (5) of the technical front face is arranged at a distance of more than 100 mm from the front end of said longitudinal side members (2).

6. Motor vehicle according to claim 2, wherein the frame (5) of the technical front face is fixed directly onto the longitudinal side members (2).

7. Motor vehicle according to any of the preceding claims, wherein the guide means (41, 42) are formed by one or more upper clamps (41) and by one or more lower clamps (42) extending the lower structure respectively above and below the axis (10) of the aerodynamic underbody flap (1).

8. Motor vehicle according to claim 7, wherein the aerodynamic underbody flap (1) has windows (12) arranged near the axis (10) to allow the passage of the lower clamps through the flap (1) when said aerodynamic underbody structure (1) is in the open position.

9. Motor vehicle according to claim 7 or claim 8, wherein the lower clamps (42) and the upper clamps (41) are arranged transversely and alternately.

10. Motor vehicle according to any of claims 7 to 9, wherein the lower clamps (42) and the upper clamps (41) extend around the rear part of the axis (10) of the aerodynamic underbody flap (1).

11. Motor vehicle according to any of the preceding claims, wherein the aerodynamic underbody flap (1) is made using a thermoplastic material.

12. Motor vehicle according to claim 11, wherein the axis (10) of the aerodynamic underbody flap comprises an inserted reinforcement piece (13) in the form of a rod made of metal or a composite material around which is molded the thermoplastic part forming the aerodynamic underbody flap (1).
